# EUROPÄISCHE PATENTSCHRIFT

(11) **EP 2 756 785 B1**
(45) Veröffentlichungstag und Bekanntmachung des Hinweises auf die Patenterteilung: **25.04.2018**
(21) Anmeldenummer: 14151863.9
(22) Anmeldetag: 21.01.2014
(51) Int. Cl.: A47J 43/046, A47J 43/07, A47J 36/02

(54) **Küchenmaschine mit einem Rührgefäß**
Food processor with a mixing vessel
Robot ménager avec un récipient de mélange

(30) Priorität: 22.01.2013 DE 102013100618
(43) Veröffentlichungstag der Anmeldung: 23.07.2014
(73) Patentinhaber: Vorwerk & Co. Interholding GmbH, 42275 Wuppertal (DE)
(72) Erfinder: Koetz, Hendrik, 45138 Essen (DE)
(74) Vertreter: Müller, Enno

(56) Entgegenhaltungen:
- EP-A1- 1 474 984
- US-A1- 2002 176 320
- US-A1- 2008 257 168

## Beschreibung

Die Erfindung betrifft eine Küchenmaschine mit einem Rührgefäß nach den Merkmalen des Oberbegriffes des Anspruches 1.

Küchenmaschinen, insbesondere der genannten Art, sind bereits in verschiedener Hinsicht bekannt geworden. Beispielsweise ist auf die DE 102 10 442 A1 zu verweisen.

Derartige Küchenmaschinen, wie auch die erfindungsgemäße Küchenmaschine, dienen zur Anwendung im Haushaltsbereich. Es handelt sich um insbesondere elektrisch angetriebene Küchenmaschinen.

Eine solche Küchenmaschine weist eine Aufnahme oder sonstige Halterung für ein Rührgefäß auf. Das Rührgefäß kann in die Aufnahme einsetzbar sein. Das Rührgefäß kann weiter insbesondere bodenseitig ein Rührwerk aufweisen, das mit einem in der Küchenmaschine vorgesehenen Elektroantrieb kuppelbar ist. Die Kupplung ist bevorzugt eine mechanische Kupplung.

Derartige Küchenmaschinen dienen unter Nutzung des Rührwerkes insbesondere dem Verrühren und/oder Zerkleinern von Gargut in dem Rührgefäß, wobei weiter bevorzugt das Rührgefäß bzw. das darin aufgenommene Gargut aufheizbar ist. Die Aufheizbarkeit des Rührgefäßes und/oder des Gargutes kann unmittelbar, beispielsweise unter Ausgestaltung des Rührgefäßbodens als elektrische Heizscheibe oder durch Strahlungseinwirkung auf das Gargut erfolgen. Die Aufheizung des Rührgefäßes kann auch mittelbar, beispielsweise induktiv erfolgen. Es kann auch eine Kontaktheizung vorgesehen sein, bei welcher ein Heizelement in wärmeleitendem Kontakt zu einem Bereich des Rührgefäßes, insbesondere einem Rührgefäßboden, ist und die Wärme so durch Kontakt in das Rührgefäß eingebracht wird. Ein Rührgefäßboden und/oder ein Teil der Rührgefäßwandung oder das gesamte Rührgefäß können aufheizbar sein.

Die Aufheizung ermöglicht es, in dem Rührgefäß auf Zubereitungsgut (Speisen, Gargut) nicht nur mechanisch einzuwirken, sondern auch im Sinne eines Garens. Hierbei kann bevorzugt das Zubereitungsgut (Gargut) kontinuierlich oder diskontinuierlich mittels des Rührwerks bewegt werden.

Aus der US-A1-2002/0176320 und der US-A1-2008/0257168 ist es bekannt, Rührgefäße mit einer vollständigen inneren Antihaftbeschichtung auszubilden.

Es ist nun mitunter zu beobachten, dass Zubereitungsgut nicht in der erwünschten Weise durch das Rührwerk erfasst wird oder nicht in der erwünschten Weise durch die Heizung erhitzt wird, da es nicht - wiederholt - mit den entsprechenden Bereichen des Rührgefäßes in Kontakt kommt. Vielmehr ist zu beobachten, dass das Zubereitungsgut an der Wandung des Rührgefäßes außerhalb gewünschter Bereiche anhaftet und nicht in der gewünschten Weise wiederholt mechanisch oder im Hinblick auf eine Erwärmung beaufschlagt wird.

Ausgehend von dem dargelegten Stand der Technik beschäftigt sich die Erfindung mit der Aufgabenstellung, eine Antihaftbeschichtung auf der Innenseite eines Rührgefäßes günstig auszubilden, im Hinblick der Anordnung und Aufteilung der Antihaftbeschichtung.

Diese Aufgabe ist zunächst beim Gegenstand des Anspruches 1 gelöst, wobei darauf abgestellt ist, dass erst oberhalb eines vertikalen, sich im Bereich des Rührwerks befindlichen Gefäß-Wandungsabschnittes die Innenfläche des Rührgefäßes mit einer Antihaftbeschichtung versehen ist.

Die Aufgabe ist weiter beim Gegenstand des Anspruches 2 gelöst, wobei darauf abgestellt ist, dass die Antihaftbeschichtung über den inneren Umfang des Rührgefäßes und/oder über die Höhe des Rührgefäßes durch nicht antihaftbeschichtete Bereiche unterbrochen ist.

Einem Anhaften von Zubereitungsgut, insbesondere von Gar- und/ oder Schneidgut ist durch eine solche Antihaftbeschichtung zumindest an besonders kritischen Bereichen der Gefäß-Innenfläche entgegengewirkt.

Unabhängig hiervon bzw. ergänzend trägt eine solche Antihaftbeschichtung auch dazu bei, dass sich in einfacher Weise das Rührgefäß nach Beendigung einer Zubereitung entleeren lässt. Es muss nicht oder nicht mehr in so wesentlichem Ausmaß anhaftendes Zubereitungsgut von der Innenfläche des Rührgefäßes gegebenenfalls abgekratzt werden.

Nicht zuletzt erleichtert eine derartige Antihaftbeschichtung auch die Reinigung des Rührgefäßes.

Von einem Rührgefäßboden aus gesehen kann die Antihaftbeschichtung an oder oberhalb des Rührgefäßbodens beginnen. Vertikal oben kann die Antihaftbeschichtung an einem umlaufenden Öffnungsrand, der auch als Öffnungsrand zu bezeichnen ist, des Rührgefäßes, beginnen bzw. bei Betrachtung von unten abschließen.

Der Rührgefäßboden, der bevorzugt beheizbar ist, kann gleichfalls ergänzend oder alternativ eine dem Inneren des Rührgefäßes zugewandte Antihaftbeschichtung aufweisen.

In dem Rührgefäßboden kann eine, insbesondere mittig ausgebildete, Durchgreiföffnung vorgesehen sein. Durch die Durchgreiföffnung kann ein die Antriebswelle des Rührwerkes bzw. der Rührwerkmesser aufnehmender Festlegungskörper des Rührwerks greifen.

Die Antihaftbeschichtung kann im Hinblick auf die Durchgreiföffnung bevorzugt ausgehend vom Übergang des Rührgefäßbodens in die Rührgefäßwandung, nach radial innen bis an einen Öffnungsrand der Durchgreiföffnung ausgebildet sein.

Alternativ kann auch vorgesehen sein, dass die Antihaftbeschichtung umlaufend oder zumindest teilweise nicht bis nach radial innen an den Öffnungsrand reichend ausgebildet ist. Insbesondere kann ein nicht mit Antihaftbeschichtung versehener, im Grundriss bevorzugt kreisringförmiger, Bereich umgebend zu der Durchgreiföffnung belassen sein. Eine solche Ausgestaltung kann vorteilhaft im Hinblick auf eine zwischen dem Festlegungskörper und dem Rührgefäßboden gegebenenfalls vorgesehene Dichtung sein. Somit kann der Dichtung ein Flächenbereich zugeordnet sein, der gerade nicht mit der Antihaftbeschichtung versehen ist.

Die Antihaftbeschichtung ist bevorzugt eine auf einer Polymer-Keramik-Nano-Verbindung basierende Beschichtung oder alternativ eine PTFE (Polytetrafluorethylen)-Beschichtung, weiter alternativ eine Silizium-Oxidbeschichtung. Als vorteilhaft erweisen sich weiter Beschichtungen, die unter der Bezeichnung DLC (diamond-like Carbon) bekannt sind.

Bevorzugt ist die gesamte Antihaftbeschichtung hinsichtlich des hierfür verwendeten Werkstoffs einheitlich gestaltet. Dies bezieht sich insbesondere auf die Antihaftbeschichtung, die auf der nach innen weisenden Fläche der Rührgefäßwandung aufgebracht ist. Darüber hinaus weiter bevorzugt aber auch auf die Antihaftbeschichtung, die auf der nach innen weisenden Fläche des Rührgefäßbodens aufgebracht ist, wenn diese auch ganz oder teilweise mit einer Antihaftbeschichtung versehen ist.

Insbesondere ist bevorzugt, dass die Antihaftbeschichtung einheitlich, das heißt ohne Ausnahme, aus einer PTFE-freien keramischen Antihaftbeschichtung besteht. Bevorzugt auch einheitlich mit einer übereinstimmenden Form der Oberflächengestaltung.

Es kann auch vorgesehen sein, dass ein oder mehrere Bereiche, gegebenenfalls im Umfangsrichtung des Rührgefäßes gesehen und/oder in vertikaler Richtung des Rührgefäßes gesehen, mit unterschiedlichen Formen der Oberflächengestaltung und/oder Materialien als Antihaftbeschichtung versehen sind. Hierbei kann es sich um zueinander beanstandete Bereiche handeln. In einer einfachen Ausgestaltung kann es sich um streifenförmige Bereiche handeln. Die streifenförmigen Bereiche können vertikal orientiert sein oder horizontal orientiert sein.

Bezüglich der nach innen weisenden Fläche der Rührgefäßwandung kann eine erste Art der Antihaftbeschichtung vorgesehen sein und auf dem Rührgefäßboden eine zweite Art der Antihaftbeschichtung. Die Antihaftbeschichtung der nach innen weisenden Fläche der Rührgefäßwandung kann also materialmäßig eine andere Antihaftbeschichtung sein als diejenige im Bereich des Rührgefäßbodens.

Eine bevorzugt vorgesehene PTFE-freie keramische Antihaftbeschichtung kann so ausgebildet sein, dass sie bis 450°C oder höher, beispielsweise bis hin zu 500°C oder 600°C, erhitzt werden kann, ohne dass die Beschichtung Schaden nimmt. Selbst im Falle einer Überhitzung werden keine schädlichen Dämpfe freigesetzt, dies bedingt durch die bevorzugte umweltverträgliche Zusammensetzung auf keramischer Basis ohne Polytetrafluoräthylen (PTFE) und weiter bevorzugt ohne Perfluoroctansäure (PFOA).

Eine Antihaftbeschichtung kann im täglichen Gebrauch hinsichtlich Energieeffizienz vorteilhaft sein. Eine Antihaftbeschichtung der hier beschriebenen Ausgestaltung zeichnet sich bevorzugt durch eine hohe Wärmedurchlässigkeit aus. Sie trägt zu einer guten Verteilung der Wärme bei.

Darüber hinaus liegt die Kratzfestigkeit einer solchen keramischen Antihaftbeschichtung um ein Vielfaches über der herkömmlicher Beschichtungen. Eine Keramik-Antihaftbeschichtung basiert bevorzugt auf Silizium-Dioxid.

Eine Schichtdicke der Antihaftbeschichtung, grundsätzlich unabhängig von ihrer tatsächlichen materialmäßigen Ausgestaltung, ist bevorzugt im Mikrometerbereich vorgesehen. Es handelt sich um eine Dünnschicht. Insbesondere ist sie in einer Dicke von 0,5 bis 3 µm vorgesehen.

Eine bevorzugte Ausgestaltung ist auch dadurch gegeben, dass, gesehen von dem Rührgefäßboden aus, die Antihaftbeschichtung erst oberhalb eines Übergangs des Rührgefäßbodens in die Rührgefäßwandung beginnt. Weiter bevorzugt ist die Innenfläche des Rührgefäßes erst oberhalb eines in horizontaler Richtung dem Rührwerk zugeordneten Bereiches der Innenfläche mit einer Antihaftbeschichtung versehen.

Der sich im Bereich des Rührwerkes, bezogen auf eine vertikale Erstreckung des Rührwerkes, befindliche Gefäß-Wandungsabschnitt, insbesondere der gesamte umlaufende, dem Bereich des Rührwerks zugeordnete Gefäß-Wandungsabschnitt, weist bevorzugt keine Antihaftbeschichtung auf. Somit ergibt sich, dass ein solcher nicht mit Antihaftbeschichtung versehener Bereich der Innenfläche des Rührgefäßes eine größere Rauigkeit aufweist. Dies kann sich bei der Nutzung der Küchenmaschine als Vorteil erweisen. Beispielsweise bei einer Zubereitung von Teig oder sonstigem Zubereitungsgut, da das Zubereitungsgut, insbesondere der Teig, im Bereich des Rührwerks, gefäßwandungsseitig auf einen, wenn auch geringen, Widerstand trifft, was die Untermengung, insbesondere bei der Teigherstellung, in vorteilhafter Weise unterstützt. Unabhängig von der Freiheit von einer Antihaftbeschichtung des genannten, dem Rührwerk zugeordneten Bereich der Rührgefäß-Innenfläche ist ergänzend oder alternativ auch der Rührgefäßboden frei von einer Antihaftbeschichtung.

Bevorzugt ist auch vorgesehen, dass die Antihaftbeschichtung erst beginnend (gesehen vom Rührgefäßboden) oberhalb eines horizontalen Projektionsbereiches eines oder mehrerer der Rührarme des Rührwerks vorgesehen ist. Hierbei kann weiter bevorzugt die Antihaftbeschichtung, gesehen von einem Rührgefäßboden nach oben zum Rührgefäßrand, erst oberhalb einer durch den oder die vertikal obersten Arme des Rührwerks definierten, quer zu einer Rührwerksachse sich erstreckenden Horizontalebene beginnend vorgesehen sein. Die Antihaftbeschichtung kann unmittelbar oberhalb einer solchen Horizontalebene beginnend nach oben sich erstrecken, oder, wie weiter bevorzugt, die Antihaftbeschichtung oberhalb einer durch den oder die vertikal obersten Rührarme des Rührwerks definierten, quer zu einer Rührwerksachse sich erstreckenden Horizontalebene beginnend (in Richtung auf den Öffnungsrand gesehen) vorgesehen ist. Die Antihaftbeschichtung kann unmittelbar oberhalb dieser Horizontalebene beginnend sich erstrecken oder, wie weiter bevorzugt, mit einem vertikalen Abstand zu der Horizontalebene von bevorzugt 1 mm bis hin zu 30 mm, weiter bevorzugt 5 bis 10 mm.

Bevorzugt ist weiter, dass bezogen auf eine vertikale Höhe des Innenraumes des Rührgefäßes ein Zehntel oder mehr der Innenfläche mit einer Antihaftbeschichtung versehen ist, weiter bevorzugt bis hin zu neun Zehntel, bevorzugt bis zu zwei Drittel. So ergibt sich bei einer beispielhaften vertikalen Höhe des Innenraumes des Rührgefäßes von 200 bis 250 mm eine Antihaftbeschichtung, die sich über ein vertikales Erstreckungsmaß von 20 bis 225 mm, weiter bevorzugt über etwa 160 bis 170 mm erstreckt.

Die Antihaftbeschichtung ist bevorzugt bis zu einem Öffnungsrand, der einem oberen umlaufenden Öffnungsrand des Rührgefäßes entspricht, durchgehend ausgebildet. Bevorzugt ausgehend von einem Bereich oberhalb des dem Rührwerk unmittelbar zugeordneten Bereiches nach vertikal oben bis hin zu dem genannten Öffnungsbereich des Rührgefäßes. Alternativ endet die Antihaftbeschichtung in vertikaler Richtung unterhalb des Öffnungsrandes des Rührgefäßes. Entsprechend ist eine vertikal obere Begrenzungslinie der Antihaftbeschichtung mit vertikalem Abstand zu dem Öffnungsrand des Rührgefäßes positioniert, so weiter bevorzugt mit einem vertikalen Abstand, der einem Zwanzigstel bis einem Drittel, weiter bevorzugt einem Zehntel bis zwei Zehntel der vertikalen Höhe des Innenraumes des Rührgefäßes, entsprechend weiter bevorzugt etwa 10 bis 80 mm, insbesondere 20 bis 50 mm.

Die bevorzugte Ausgestaltung kann auch dadurch gegeben sein, dass die vertikale Höhe der Antihaftbeschichtung abgetragen von einer dem Öffnungsrand zugewandten oder mit diesem zusammenfallenden oberen Begrenzung der Antihaftbeschichtung in Richtung auf den Boden des Rührgefäßes, über welche bevorzugt keine oder jedenfalls keine flächendeckende Antihaftbeschichtung ausgebildet ist, ein Zehntel oder mehr bis hin zu acht Zehntel der vertikalen Höhe des Innenraumes des Rührgefäßes beträgt.

Weiter bevorzugt weist die Antihaftbeschichtung eine mikrostrukturierte Oberfläche auf. Die Oberfläche, insbesondere in Form einer Mikrostruktur, kann schuppen- oder riefenartig sein. Sie kann auch wellen- oder punktartig sein. Die Mikrostruktur bezieht sich insbesondere bevorzugt darauf, dass entsprechende Ausformungen, als beispielsweise eine Schuppe, eine größte Dimension in der Fläche (Grundriss) von 50 µm oder weniger aufweisen, bis hin zu beispielsweise 2µm oder 3µm.

Die Antihaftbeschichtung kann eine Rautiefe von 1 µm oder mehr aufweisen, bevorzugt bis hin zu 1 mm.

In bevorzugter Ausgestaltung ist die Antihaftwirkung durch eine Oberfläche mit sehr geringer Rautiefe, insbesondere durch eine polierte Oberfläche erreicht. Die Rautiefe kann insofern im Bereich von 0,005 µm bis hin zu 25 µm gegeben sein.

Die Antihaftbeschichtung kann durch den Auftrag einer Nano-Beschichtung gebildet sein.

Bevorzugt ist die Antihaftbeschichtung über den Umfang des Gefäßes und/oder die Höhe unterbrochen. Das Fließverhalten insbesondere von Flüssigkeiten ist abhängig von der inneren Reibung (Viskosität) und den Reibkoeffizienten an den die Flüssigkeit umgebenden Oberflächen. Das Strömungsverhalten ist abhängig von der Schubspannung und der Schergeschwindigkeit des Fluids. In beiden Fällen wird das rotierende Medium (Zubereitungsgut) durch unterschiedliche Oberflächenbeschaffenheiten unterschiedlich stark (negativ) beschleunigt, d.h. abgebremst, so dass die Durchmischung an der Behälterwand (Verwirbelungen durch Schubspannung) und damit im ganzen Zubereitungsgut erhöht wird.

Die unterschiedlichen Oberflächenbeschaffenheiten sind bevorzugt erreicht durch antihaftbeschichtete Zonen, die von nicht antihaftbeschichteten Zonen unterbrochen sind. Alternativ oder kombinativ wird bevorzugt, dass Antihaftzonen unterschiedlicher Rautiefen vorgesehen sind.

Derartige Rührgefäße werden bevorzugt aus einem Metallwerkstoff, beispielsweise Edelstahl, etwa einem Edelstahlblech, hergestellt. Die Herstellung kann durch Tiefziehen im Tiefziehverfahren erfolgen.

Eine Rührwerksnabe und/oder auch die Rührwerksarme oder jedenfalls an den Rührwerksarmen ausgebildete Messer können auch mit einer Antihaftbeschichtung, wie beschrieben, versehen sein.

Die Aufbringung der Antihaftbeschichtung wird bevorzugt bei ansonsten vollständig fertiggestelltem Rührgefäß vorgenommen. Alternativ kann auch ein gesonderter Rührgefäßboden - zunächst - ausgebildet werden und mit einer Antihaftbeschichtung versehen werden, wie auch die Innenfläche der Rührgefäßwandung und sodann erst die Teile zu dem gesamten Rührgefäß zusammengesetzt werden. Die Zusammensetzung kann auch beispielsweise in einem Verschweißen oder Verkleben der Teile miteinander bestehen.

Die Antihaftbeschichtung auf Keramikbasis weist eine hohe Festigkeit gegenüber mechanischer Beanspruchung auf. Sie weist darüber hinaus auch eine gute Wärmeleitfähigkeit auf.

Die Keramikmasse kann im Sol-Gel-Verfahren auf die Innenfläche des Rührgefäßes aufgebracht werden. Hierbei handelt es sich um ein nass-chemisches Verfahren zur Herstellung keramischer oder keramisch-organischer Werkstoffe. Der Übergang vom flüssigen Sol zum keramischen Werkstoff erfolgt über einen Gelzustand, wobei es während der Sol-Gel-Transformation zu einer dreidimensionalen Vernetzung der Partikel im Lösungsmittel kommt, wodurch das Gel Festkörpereigenschaften erhält. Die Überführung des Gels in einen oxidkeramischen Werkstoff erfolgt durch kontrollierte Wärmebehandlung, bevorzugt unter Luft. Der bevorzugt auf die Innenfläche, weiter bevorzugt auch auf die nach innen weisende Fläche des Rührgefäßbodens aufgebrachte Gel-Film wird einer Wärmebehandlung unter sauerstoffhaltiger Atmosphäre unterzogen.

Bevorzugt wird die Keramikmasse durch Aufstreichen auf die Innenfläche oder weiter beispielsweise durch Aufspritzen auf die Innenfläche aufgebracht.

In einer weiter bevorzugten Ausgestaltung des Verfahrens ist vorgesehen, dass das Einbrennen bei einer Temperatur von ca. 350 bis 450°C, bevorzugt ca. 400°C vorgenommen wird.

Eine Küchenmaschine, wie sie hier beschrieben ist, zeichnet sich insbesondere dadurch aus, dass das Rührgefäß eine Höhe von 10 bis 40 cm aufweist (freie Innenhöhe, gemessen von einer Oberseite eines Rührgefäßbodens bis zum Öffnungsrand) und/oder ein Volumen von ½ bis 4 Liter beispielsweise aufweist. Nachstehend ist die Erfindung anhand der beigefügten Zeichnung erläutert, die aber lediglich Ausführungsbeispiele darstellt. Auf der Zeichnung zeigt:
- Fig. 1: in einem partiellen Vertikalschnitt eine Küchenmaschine der in Rede stehenden Art mit einem gefäßwandungsinnenseitig mit einer Antihaftbeschichtung versehenen Rührgefäß, eine erste Ausführungsform nicht gemäss der Erfindung betreffend;
- Fig. 2: die Herausvergrößerung des Bereiches II in Fig. 1;
- Fig. 3: eine der Fig. 1 entsprechende Darstellung, betreffend eine zweite Ausführungsform; gemäss der Erfindung
- Fig. 4: eine dritte Ausführungsform gemäß der Darstellung in Fig. 1; und
- Fig. 5: eine vierte Ausführungsform gemäß der Darstellung in Fig. 1.

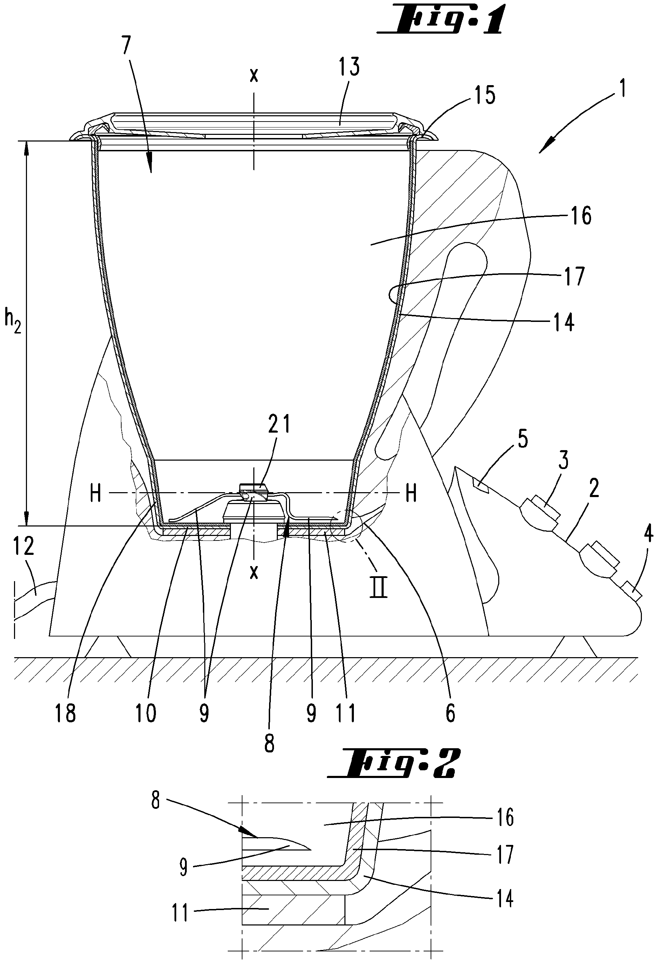

Dargestellt und beschrieben ist zunächst mit Bezug zu Fig. 1 eine elektrisch betriebene Küchenmaschine 1. Die Küchenmaschine 1 kann ein Bedienfeld 2 aufweisen, bei dem im Weiteren Regler und/oder Taster 3, 4 vorgesehen sein können. Es kann auch ein Display 5 zum Anzeigen der insbesondere über die Regler und/oder Taster 3, 4 einzustellenden Parameter, wie bspw. eine Rührwerk-Drehzahl und/oder eine Heiztemperatur vorgesehen sein.

Des Weiteren kann die Küchenmaschine 1 über eine Rührgefäßaufnahme 6 verfügen. In der Rührgefäßaufnahme 6 kann ein Rührgefäß 7 formschlüssig aufnehmbar und halterbar sein. Die Aufnehmbarkeit und Halterbarkeit kann auf einen Fußbereich des Rührgefäßes 7 beschränkt sein. Das Rührgefäß 7 ist bevorzugt im Wesentlichen rotationssymmetrisch ausgebildet, mit einer zentralen Vertikalachse x.

Im Bodenbereich weist das Rührgefäß 7 ein Rührwerk 8 auf. Das Rührwerk 8 kann in der Zuordnungsstellung des Rührgefäßes 7, beispielsweise in der Rührgefäßaufnahme 6 befindlich, formschlüssig gekoppelt mit einem in der Küchenmaschine 1 vorgesehenen, nicht dargestellten, elektromotorischen Rührwerksantrieb sein.

Das Rührwerk 8 weist mindestens einen, bevorzugt mehrere Rührarme 9 auf, weiter bevorzugt zwei Rührarm-Paare. Von den Rührwerk-Paaren kann ein Rührwerk-Paar vertikal oberhalb des anderen Rührwerk-Paares angeordnet sein. Die Rührarme 9 eines Rührwerk-Paares erstrecken sich bevorzugt in diametraler Gegenüberlage nach radial außen. Ein Rührarm 9 oder die Rührarme 9 eines Rührwerk-Paares können ausgehend von einer Rührwerkachse zumindest tendenziell und abschnittweise in Richtung auf einen Rührgefäßboden 10 gerichtet sein.

Eine Rührwerksachse ist in Zuordnungsstellung des Rührgefäßes 7 zur Küchenmaschine 1 bevorzugt vertikal verlaufend ausgerichtet. Weiter bevorzugt fällt die Rührwerkachse 7 in dieser Zuordnungsstellung mit einer Vertikalachse x des Rührgefäßes 7 zusammen.

Die Elektroversorgung des Rührwerkantriebes sowie einer weiter bevorzugt behälterbodenseitig vorgesehenen Heizung 11, bspw. in Form einer elektrischen Widerstandsheizung, und darüber hinaus auch die elektrische Steuerung der gesamten Küchenmaschine 1 ist über ein Netzanschlusskabel 12 erreicht.

Das Rührgefäß 7 ist weiter insbesondere im Betrieb des Rührwerks 8 bevorzugt durch einen Deckel 13 verschlossen.

Das Rührgefäß 7 weist weiter bevorzugt eine aus einem Metallwerkstoff bestehende Gefäß-Wandung 14 auf, weiter bevorzugt eine Edelstahlwandung. Ein vertikal oberes Ende der Gefäß-Wandung 14 bildet einen insbesondere durch Abnahme des Deckels 13 freizulegenden Öffnungsrand 15.

Einem Innenraum 16 des Rührgefäßes 7 zugewandt ist eine Innenfläche der Gefäß-Wandung 14 mit einer Antihaftbeschichtung 17 versehen, die sowohl in der jeweiligen Gesamtdarstellung als auch in der Herausvergrößerung gemäß Fig. 2 zur Verdeutlichung in einer übertrieben starken Dicke dargestellt ist. Die Antihaftbeschichtung 17 weist bevorzugt eine Dicke von 0,5 bis 3 µm auf.

Die Antihaftbeschichtung 17 ist bevorzugt eine keramische Antihaftbeschichtung. Die Antihaftbeschichtung ist bevorzugt durch Auftragen eines keramischen Gels auf die Innenfläche des Rührgefäßes 7 und anschließender Hitzebehandlung erreicht. Die Hitzebehandlung kann beispielsweise im Temperaturbereich von 400°C vorgenommen sein.

Die Antihaftbeschichtung 17 erstreckt sich bevorzugt nicht erfindungsgemäss über die gesamte vertikale Höhe h₂ des Innenraumes 16 des Rührgefäßes 7, entsprechend ausgehend von einem oberen Öffnungsrand 15 des Rührgefäßes 7 bis hin zum Übergang der Gefäßwandung 14 in einen Rührgefäßboden 10. Bevorzugt ist die Antihaftbeschichtung 17 nicht erfindungsgemäss vollständig, das heißt lückenlos, wandungsinnenseitig der Gefäß-Wandung 14 vorgesehen.

Darüber hinaus kann auch der Rührgefäßboden 10 auf der dem Innenraum 16 zugewandten Oberfläche mit der Antihaftbeschichtung 17 versehen sein. Es kann ein homogener, materialeinheitlicher Übergang der Antihaftbeschichtung von dem Rührgefäßboden 10 zur Innenseite der Gefäßwandung 14 ausgebildet sein.

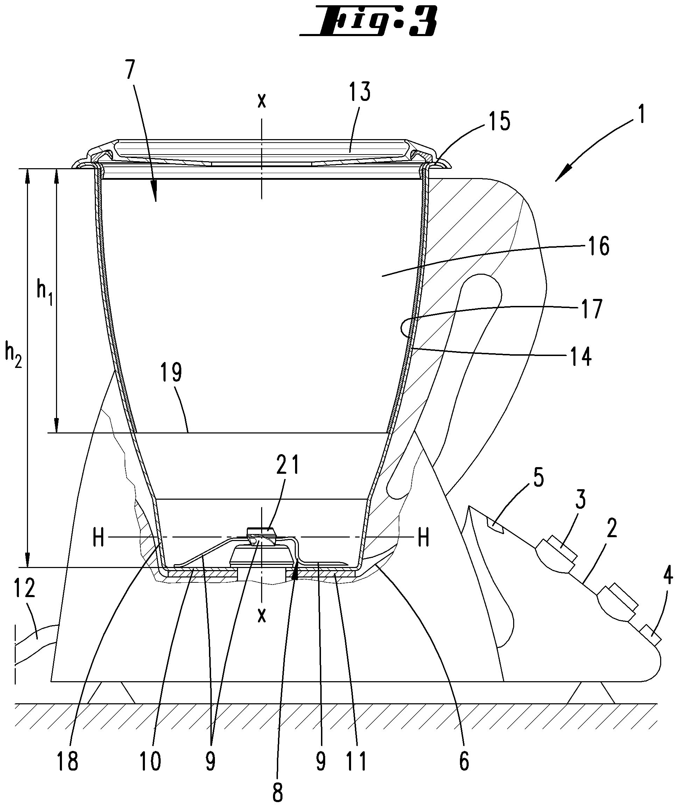

In den weiter nachstehend beschriebenen erfindungsgemässen Ausführungsformen gemäß den Figuren 3 bis 5 erstreckt sich die Antihaftbeschichtung 17 ausgehend von einem vertikalen, sich im Bereich des Rührwerks 8 befindlichen Gefäß-Wandungsabschnittes 18 aus nach oben. Entsprechend ist der dem Rührgefäßboden 10 zugewandte Gefäß-Wandungsabschnitt 18 nicht mit einer Antihaftbeschichtung 17 versehen.

Die Figur 3 zeigt in einer Ausführungsform eine Antihaftbeschichtung 17, welche unmittelbar vom Öffnungsrand 15 ausgehend sich nach vertikal unten in Richtung auf das Rührwerk 8 bzw. auf den Rührgefäßboden 10 über eine vertikale Höhe h₁ erstreckt. Die Höhe h₁ umfasst bevorzugt einen größeren Teil der Höhe h₂. Beispielsweise zwei Drittel der gesamten Höhe h₂ des Innenraumes 16 des Rührgefäßes 7. Hieraus folgend ist eine vertikal untere Begrenzung 19 der Antihaftbeschichtung 17 mit einem vertikalen Maß zum Rührgefäßboden 10 beabstandet. Dieses vertikale Maß kann bevorzugt dem Abstands zwischen einer von einem oder den vertikal obersten Rührarmen 9 definierten Horizontalebene H ausgehend bis zu dem Übergang in den Rührgefäßboden 10 definiert sein.

Die Horizontalebene H kann in ihrer Vertikalanordnung in weiterer Einzelheit dadurch definiert sein, dass sie berührend zu einem vertikal obersten Bereich eines Rührarmes (bezogen auf alle vorhandenen Rührarme) verläuft. Sie kann in ihrer Vertikalanordnung auch dadurch definiert sein, dass sie berührend zu einem vertikal obersten Bereich eines Rührarmes (bezogen auf alle vorhandenen Rührarme) an dessen radial äußerstem Ende verläuft. Darüber hinaus kann die Vertikalanordnung auch dadurch definiert sein, dass sie zwischen einer der beiden vorstehend beschriebenen Positionen gegeben ist. Hierbei kann jede Zwischenposition eingenommen werden, insbesondere in 1/10-Schritten der definierten obersten und untersten Anordnung der Vertikalebene oder in einem diesbezüglichen Bereich. So kann beispielsweise vorgesehen sein, dass die genannte Horizontalebene H 2/10 des Abstandes zwischen einer Stellung berührend zu einem vertikal obersten Bereich eines Rührarmes und berührend zu einem vertikal obersten Bereich eines Rührarmes an dessen radial äußerstem Ende, abgetragen von dem obersten Wert nach unten und/oder dem untersten Wert nach oben, verläuft. Oder in einem diesbezüglichen vertikalen Bereich verläuft.

Bevorzugt erstreckt sich die Antihaftbeschichtung 17 ununterbrochen über den gesamten Umfang der Gefäß-Innenwandung. Dies gegebenenfalls begrenzt auf die schon angegebene Höhenerstreckung (Vertikalmaß).

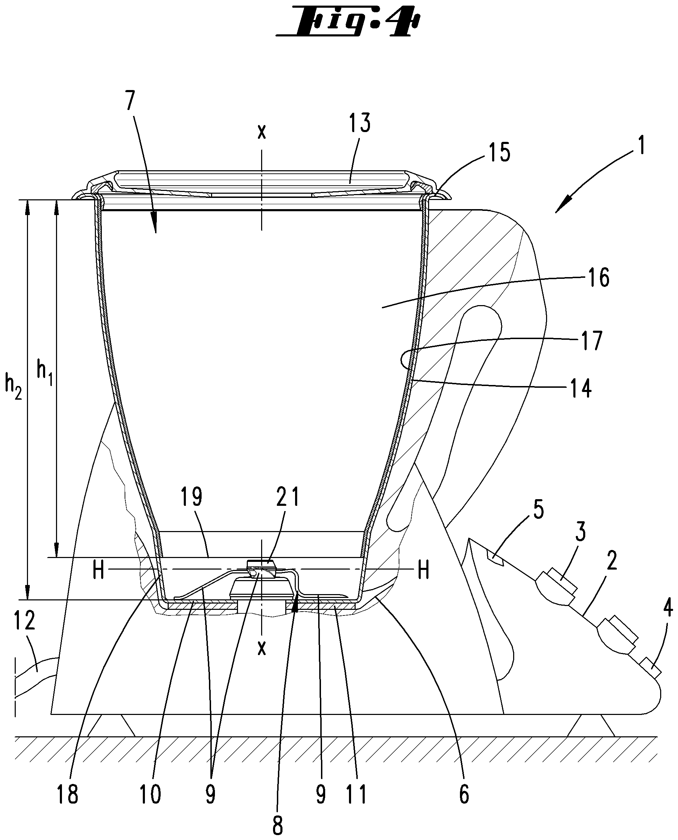

In Fig. 4 ist eine Ausführungsform dargestellt, bei welcher sich die Antihaftbeschichtung 17 ausgehend von dem Öffnungsrand 15 nach vertikal unten bis zu dem unmittelbar dem Rührwerk 8 zugeordneten Gefäß-Wandungsabschnitt 18 erstreckt. Im Hinblick auf die Definition des Gefäß-Wandungsabschnittes 18 ausgehend von einer durch einen vertikal obersten Rührarm gegebenen Horizontalebene H oder ausgehend von einer Zwischenstellung oder untersten Stellung wie vorstehend beschrieben kann noch ein gewisser zusätzlicher Freiraum diesbezüglich gegeben sein. Dementsprechend ist die vertikal untere Begrenzung der Antihaftbeschichtung 17 gegenüber der ersten Ausführungsform nach oben minimal beabstandet zu der durch die obersten Rührarme 9 definierten Horizontalebene H. Die minimale Beabstandung kann ein Viertel bis ein Hunderstel des vertikalen Gesamtmaßes der Antihaftbeschichtung 17 ausgehend von dem Öffnungsrand bis zu dem Gefäß-Wandungsabschnitt 18 betragen. Die Antihaftbeschichtung 17 erstreckt sich entsprechend bevorzugt über eine Höhe h₁, welche etwa neun Zehntel der Gesamthöhe h₂ des Rührgefäß-Innenraumes 16 entspricht.

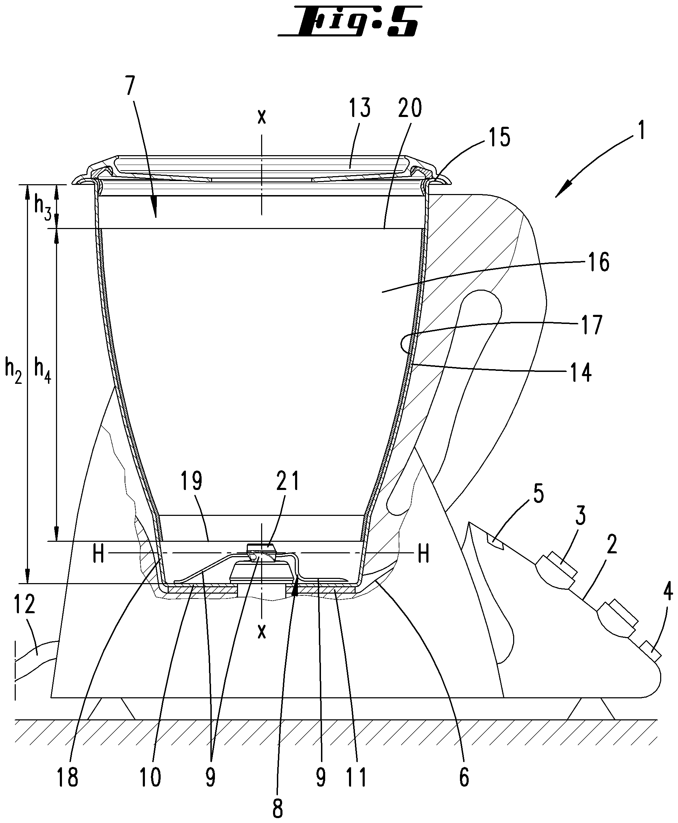

Weiter alternativ erstreckt sich die Antihaftbeschichtung 17 nach vertikal oben, wie in der Ausführungsform gemäß Fig. 5 dargestellt, nicht bis an den Öffnungsrand 15. Eine vertikal obere Begrenzung 20 ist bevorzugt zu dem Öffnungsrand 15 beabstandet, dies weiter bevorzugt mit einem vertikalen Abstandsmaß h₃, welches etwa ein Zehntel der Gesamthöhe h₂ des Rührgefäß-Innenraumes 16 entspricht. Bei gleicher Auslegung des Rührgefäßes 7 entsprechend dem Ausführungsbeispiel in Fig. 4 und einer vertikalen Erstreckung h₄ der Antihaftbeschichtung 7 über bevorzugt acht Zehntel der Gesamthöhe h₂ des Rührgefäß-Innenraumes 16 ergibt sich eine Anordnung der vertikal unteren Begrenzung 19 der Antihaftbeschichtung 17 entsprechend dem Ausführungsbeispiel gemäß Fig. 4 in vertikal geringer Beabstandung zur Horizontalebene H.

Durch die vollständige oder auch partielle Antihaftbeschichtung der Gefäß-Wandungsinnenseite wird erreicht, dass herumgeschleuderte, anhaftende Gar- oder Zerkleinerungsgüter an der beschichteten Gefäß-Wandung 14 herunterrutschen und damit wieder in den Wirkbereich des Rührwerks 8 gelangen. Durch die Beschichtung ist die Anhaftung auf der Oberfläche verringert. Die Durchmischung des Gargutes wird verbessert und auch die Zerkleinerungsleistung von Zerkleinerungsgütern verbessert, da die Güter schneller zurück in den Wirkbereich des Rührwerkes 8 gelangen. Prozessschritte der Küchenmaschine können hierdurch auch schneller ablaufen als es ohne die Antihaftbeschichtung möglich wäre. Dies bei effektiver Nutzung der Wirkflächen.

Der gegebenenfalls nicht beschichtete Gefäß-Wandungsabschnitt 18 im Bereich des Rührwerkes 8, sowie weiter bevorzugt der gegebenenfalls nicht beschichtete Rührgefäßboden 10 können sich in vorteilhafter Weise positiv auf insbesondere eine Teigherstellung auswirken, da zufolge der Nichtbeschichtung hierdurch das Untermengen bzw. Verkneten eines solchen Teiges im Einwirkungsbereich des Rührwerks 8 weiter unterstützt wird.

Die Rührarme 9 selbst und/oder eine Rührwerknabe 21 können auch ganz oder teilweise mit einer Antihaftbeschichtung, bevorzugt in einer Ausgestaltung wie vorstehend beschrieben, versehen sein. Gegebenenfalls auch nur die Rührwerkarme 9 und/oder die Rührwerknabe 21.

**Bezugszeichenliste:**

| | | | |
|---|---|---|---|
| 1 | Küchenmaschine | 21 | Rührwerknabe |
| 2 | Bedienfeld | | |
| 3 | Regler | | |
| 4 | Taste | | |
| 5 | Display | | |
| 6 | Rührgefäßaufnahme | | |
| 7 | Rührgefäß | | |
| 8 | Rührwerk | | |
| 9 | Rührarm | | |
| 10 | Rührgefäßboden | | |
| 11 | Heizung | | |
| 12 | Netzanschlusskabel | | |
| 13 | Deckel | | |
| 14 | Gefäß-Wandung | | |
| 15 | Öffnungsrand | | |
| 16 | Innenraum | | |
| 17 | Antihaftbeschichtung | | |
| 18 | Gefäß-Wandungsabschnitt | | |
| 19 | untere Begrenzung | | |
| 20 | obere Begrenzung | | |
| h₁ | Höhe | | |
| h₂ | Höhe | | |
| h₃ | Abstandsmaß | | |
| h₄ | Höhe | | |
| x | Vertikalachse | | |
| H | Horizontalebene | | |

## Patentansprüche

1. Küchenmaschine (1) mit einem Rührgefäß (7) und einem Antrieb für ein Rührwerk (8) in dem Rührgefäß (7), wobei das Rührgefäß (7) vorzugsweise aufheizbar ist, wobei weiter eine Innenfläche des Rührgefäßes (7) mit einer Antihaftbeschichtung (17) versehen ist, **dadurch gekennzeichnet, dass** erst oberhalb eines vertikalen, sich im Bereich des Rührwerks (8) befindlichen Gefäß-Wandungsabschnittes (18) die Innenfläche des Rührgefäßes (7) mit einer Antihaftbeschichtung (17) versehen ist.

2. Küchenmaschine nach den Merkmalen des Oberbegriffes des Anspruches 1 oder nach Anspruch 1, **dadurch gekennzeichnet, dass** die Antihaftbeschichtung (17) über den inneren Umfang des Rührgefäßes (7) und/oder über die Höhe des Rührgefäßes (7) durch nicht antihaftbeschichtete Bereiche unterbrochen ist.

3. Küchenmaschine nach Anspruch 1, **dadurch gekennzeichnet, dass** die Antihaftbeschichtung (17) erst oberhalb eines horizontalen Projektionsbereiches des oder der Rührarme (9) vorgesehen ist.

4. Küchenmaschine nach einem der vorhergehenden Ansprüche, **dadurch gekennzeichnet, dass** bezogen auf eine vertikale Höhe (h₂) des Innenraumes (16) des Rührgefäßes (7) ein Zehntel oder mehr der Innenfläche mit einer Antihaftbeschichtung (17) versehen ist.

5. Küchenmaschine nach Anspruch 4, **dadurch gekennzeichnet, dass** bezogen auf eine vertikale Höhe (h₂) des Innenraumes des Rührgefäßes (7) die Innenfläche bis zu neun Zehntel, bevorzugt zu zwei Drittel, mit einer Antihaftbeschichtung (17) versehen ist.

6. Küchenmaschine nach einem der vorhergehenden Ansprüche, **dadurch gekennzeichnet, dass** eine vertikale Höhe (hi), abgetragen von einer dem Öffnungsrand (15) zugewandten oberen Begrenzung der Antihaftbeschichtung (17), in Richtung auf den Boden (10) des Rührgefäßes (7), über welche eine Antihaftbeschichtung (17) ausgebildet ist, ein Zehntel oder mehr bis hin zu acht Zehntel der vertikalen Höhe (h₂) des Innenraumes des Rührgefäßes (7) beträgt.

7. Küchenmaschine nach einem der vorhergehenden Ansprüche, **dadurch gekennzeichnet, dass** die Antihaftbeschichtung (17) bis zu einem Öffnungsrand (15) des Rührgefäßes (7) durchgehend ausgebildet ist.

8. Küchenmaschine nach einem der Ansprüche 1 bis 6, **dadurch gekennzeichnet, dass** die Antihaftbeschichtung (17) in vertikaler Richtung unterhalb des Öffnungsrandes (15) des Rührgefäßes (7) endet.

## Claims

1. Food processor (1) comprising an agitated vessel (7), and a drive for an agitator (8) inside the agitated vessel (7), the agitated vessel (7) preferably being heatable, furthermore an inner surface of the agitated vessel (7) being provided with a non-stick coating (17), **characterised in that** the inner surface of the agitated vessel (7) is provided with a non-stick coating (17) only above a vertical vessel wall portion (18) located in the region of the agitator (8).

2. Food processor according to the features of the preamble of claim 1 or according to claim 1, **characterised in that**, over the inner periphery of the agitated vessel (7) and/or over the height of the agitated vessel (7), the non-stick coating (17) is interrupted by regions having no non-stick coating.

3. Food processor according to claim 1, **characterised in that** the non-stick coating (17) is provided only above a horizontal projection region of the agitating arm or arms (9).

4. Food processor according to any of the preceding claims, **characterised in that**, based on a vertical height (h₂) of the interior (16) of the agitated vessel (7), one tenth or more of the inner surface is provided with a non-stick coating (17).

5. Food processor according to claim 4, **characterised in that**, based on a vertical height (h₂) of the interior of the agitated vessel (7), up to nine tenths, and preferably up to two thirds, of the inner surface is provided with a non-stick coating (17).

6. Food processor according to any of the preceding claims, **characterised in that** a vertical height (hi), taken from an upper boundary of the non-stick coating (17) which faces the edge (15) of the opening, and extending towards the base (10) of the agitated vessel (7), over which height a non-stick coating (17) is formed, is from one tenth or more, to eight tenths, of the vertical height (h₂) of the interior of the agitated vessel (7).

7. Food processor according to any of the preceding claims, **characterised in that** the non-stick coating (17) is provided continuously up to an edge (15) of the opening of the agitated vessel (7).

8. Food processor according to any of claims 1 to 6, **characterised in that** the non-stick coating (17) ends underneath the edge (15) of the opening of the agitated vessel (7) in the vertical direction.

## Revendications

1. Robot de cuisine (1), comprenant un récipient de mélange (7) et un dispositif d'entraînement pour un agitateur (8) dans le récipient de mélange (7), dans lequel le récipient de mélange (7) peut de préférence être chauffé, dans lequel en outre la surface intérieure du récipient de mélange (7) est pourvue d'un revêtement antiadhésif (17), **caractérisé en ce que** la surface intérieure du récipient de mélange (7) est pourvue d'un revêtement antiadhésif (17) seulement au-dessus d'une portion verticale de paroi de récipient (18) qui se situe dans la région de l'agitateur (8).

2. Robot de cuisine selon les caractéristiques du préambule de la revendication 1 ou selon la revendication 1, **caractérisé en ce que** le revêtement antiadhésif (17) est interrompu par des zones dépourvues de revêtement antiadhésif sur la circonférence intérieure du récipient de mélange (7) et/ou sur la hauteur du récipient de mélange (7).

3. Robot de cuisine selon la revendication 1, **caractérisé en ce que** le revêtement antiadhésif (17) est prévu seulement au-dessus d'une zone de projection horizontale du ou des bras de mélange (9).

4. Robot de cuisine selon l'une des revendications précédentes, **caractérisé en ce que**, par rapport à une hauteur verticale (h₂) de l'espace intérieur (16) du récipient de mélange (17), un dixième ou plus de la surface intérieure est pourvue d'un revêtement antiadhésif (17).

5. Robot de cuisine selon la revendication 4, **caractérisé en ce que**, par rapport à une hauteur verticale (h₂) de l'espace intérieure du récipient de mélange (7), la surface intérieure est pourvue d'un revêtement antiadhésif (17) jusqu'aux neuf dixièmes, de préférence aux deux tiers.

6. Robot de cuisine selon l'une des revendications précédentes, **caractérisé en ce qu'**une hauteur verticale (h₁) qui est mesurée en direction du fond (10) du récipient de mélange (7) à partir d'une délimitation supérieure du revêtement antiadhésif orientée vers le bord d'ouverture (15) et sur laquelle est formé un revêtement antiadhésif (17), correspond à un dixième ou plus et jusqu'à huit dixièmes de la hauteur verticale (h₂) de l'espace intérieur du récipient de mélange (7).

7. Robot de cuisine selon l'une des revendications précédentes, **caractérisé en ce que** le revêtement antiadhésif (17) est formé de manière continue jusqu'à un bord d'ouverture (15) du récipient de mélange (7).

8. Robot de cuisine selon l'une des revendications 1 à 6, **caractérisé en ce que** le revêtement antiadhésif (17) s'arrête, en direction verticale, en-dessous du bord d'ouverture (15) du récipient de mélange (17).
